# EUROPÄISCHE PATENTSCHRIFT

(11) **EP 1 404 543 B1**
(45) Veröffentlichungstag und Bekanntmachung des Hinweises auf die Patenterteilung: **02.08.2006**
(21) Anmeldenummer: 02758272.5
(22) Anmeldetag: 25.06.2002
(51) Int. Cl.: B60N 2/46, B60N 3/00

(54) **SITZANORDNUNG MIT VERSTELLBAREM SITZSEGMENT**
SEATING ARRANGEMENT WITH AN ADJUSTABLE SEATING SEGMENT
ENSEMBLE SIEGE COMPORTANT UN SEGMENT DE SIEGE REGLABLE

(30) Priorität: 27.06.2001 DE 20110630 U
(43) Veröffentlichungstag der Anmeldung: 07.04.2004
(73) Patentinhaber: Johnson Controls GmbH, 51399 Burscheid (DE)
(72) Erfinder: FISHER, Siegfried, 41366 Schwalmtal (DE); HEMMELRATH, Rudolf, 51377 Leverkusen (DE)
(74) Vertreter: Wolff, Felix
(86) Internationale Anmeldenummer: PCT/EP2002/007016
(87) Internationale Veröffentlichungsnummer: WO 2003/002372

(56) Entgegenhaltungen:
- EP-A- 0 625 444
- DE-C- 19 954 930
- DE-U- 20 006 562
- US-A- 4 685 729
- US-A- 5 562 331
- US-A- 5 911 470
- US-A- 6 102 463
- PATENT ABSTRACTS OF JAPAN vol. 1996, no. 09, 30. September 1996 (1996-09-30) & JP 08 127279 A (HINO MOTORS LTD), 21. Mai 1996 (1996-05-21)

## Beschreibung

Die vorliegende Erfindung betrifft eine Sitzanordnung, insbesondere für einen Fahrzeugsitz, mit einem unteren, eine im Wesentlichen etwa horizontale oder leicht geneigte Sitzfläche aufweisenden Sitzpolsterteil und einem integrierten Sitzsegment mit einer Oberseite und einer gegenüberliegenden Unterseite, wobei das Sitzsegment über Führungsmittel zwischen einer ersten Stellung, in der es in dem Sitzpolsterteil versenkt mit der Oberseite einen Teil der Sitzfläche des Sitzpolsterteils bildet, und einer zweiten Stellung, in der es aus der Sitzfläche heraus gegenüber dem Sitzplosterteil erhöht angeordnet ist, bewegbar geführt ist.

Die US-A-5 911 470 beschreibt eine derartige Sitzanordnung, wobei ein Teil des Sitzpolsterteils aus einer ersten, versenkt liegenden Stellung nach oben und hinten bewegbar ist, um in der zweiten Stellung eine Armstütze für eine auf dem Nachbarsitz sitzende Person zu bilden. Dazu ist diese Armstütze in ihrem hinteren Bereich über Hebel anhebbar und nach hinten versetzbar, und der vordere Bereich ist über eine Schiebeführung so geführt, dass er ebenfalls angehoben und auch nach hinten verschoben wird. Dadurch bildet die gepolsterte Oberseite dieser Armstütze in der einen Stellung einen Teil der Sitzfläche und dann auch in der anderen Stellung eine gepolsterte Armauflage. Zudem werden in der zweiten Stellung im vor der nach hinten versetzten Armstütze liegenden Bereich zwei Aufnahmen für Getränkedosen freigegeben. Zum Überführen, aus der ersten, im Sitzpolsterteil versenkten Stellung in die erhöhte zweite Stellung muß die Armstütze in ihrem hinteren Bereich mittels einer dort befestigten Lasche ergriffen und angehoben und dann insgesamt nach hinten bewegt werden. Dies führt zu einem für den Benutzer nicht sehr komfortablen Bewegungsablauf, weil der Arm weit nach hinten bewegt werden muß. Außerdem wird in der zweiten Stellung auch nur relativ wenig Raum zur Halterung von lediglich zwei Getränkedosen geschaffen.

Der vorliegenden Erfindung liegt die Aufgabe zugrunde, eine Sitzanordnung der genannten Art zu schaffen, die eine besonders komfortable Verwendung und eine erhöhte Nutzungsvariabilität gewährleistet.

Erfindungsgemäß wird dies dadurch erreicht, dass die Führungsmittel derart ausgebildet sind, dass sie beim Überführen des Sitzsegmentes zwischen seinen beiden Stellungen zusätzlich zu dem Höhenversatz jeweils eine zwangsläufige Wendebewegung um etwa 180° bewirken, so dass das Sitzsegment in der erhöhten zweiten Stellung mit seiner Unterseite von dem Sitzpolsterteil weg nach oben weist. Dadurch ist es vorteilhafterweise möglich, die Unterseite des Sitzsegmentes wahlweise als Armauflage und/oder als tischartige Ablagefläche zu nutzen. Zudem kann das Sitzsegment auf seiner Unterseite Halteaufnahmen für nahezu beliebige Gegenstände, wie Getränkebehälter, Audio- und/oder Videogeräte und/oder Sonstiges, aufweisen. Somit kann vorteilhafterweise nahezu das gesamte Volumen innerhalb des Sitzsegmentes beliebig als Stauraum genutzt werden.

Es ist weiterhin vorteilhaft, wenn die Führungsmittel als Gelenkviereck-Getriebe insbesondere mit zwei gleichartigen, beidseitig des Sitzsegmentes parallel angeordneten Teilgetrieben ausgebildet sind. Durch ein solches Gelenk-Getriebe läßt sich eine für den Benutzer komfortable, ergonomische Kinematik erreichen, weil zum Überführen in die zweite Stellung das Sitzsegment in seinem vorderen Bereich manuell angehoben und über eine bogenförmige Bewegungsbahn nach hinten bewegt werden kann. Dies kann in Anpassung an den natürlichen Bewegungsablauf eines menschlichen Arms ausgelegt sein, so dass eine sehr komfortable "intuitive" Bewegung erreicht wird.

Durch die Auslegung des Gelenkviereck-Getriebes wird zudem erreicht, dass die als Tischfläche und/oder Armauflage nutzbare Unterseite des Sitzsegmentes in der umgekehrten zweiten Stellung automatisch derart gegenüber der Sitzfläche erhöht ist, dass auch dies für den Benutzer ergonomisch und somit komfortabel ist. Als günstig hat sich beispielsweise ein Höhenversatz von etwa 20 cm herausgestellt.

Die Erfindung ist besonders für eine Sitzbank, grundsätzlich aber auch für einen Einzelsitz geeignet, wobei sich das Sitzsegment bequem von einem Nachbarsitz aus umlegen läßt, wenn der mit dem Sitzsegment ausgestattete Sitzbereich nicht zum Sitzen benötigt wird. Dies trägt zur Bequemlichkeit für die jeweils auf dem benachbarten Sitz sitzende Person bei.

Weitere vorteilhafte Ausgestaltungsmerkmale und Vorteile der Erfindung sind in den Unteransprüchen sowie der folgenden Beschreibung enthalten.

Anhand von stark schematischen Darstellungen soll eine bevorzugte Ausführungsform der Erfindung genauer erläutert werden. Dabei zeigen:
- Fig. 1.: eine Perspektivansicht einer erfindungsgemäßen Sitzanordnung,
- Fig. 2: in mehreren Teildarstellungen 2a bis 2e jeweils einen schematischen Schnitt in der Ebene II-II gemäß Fig. 1 in unterschiedlichen Stellungen während des Überführens des Sitzsegmentes von der ersten Stellung (2a) in die zweite Stellung (2e) und
- Fig. 3: eine vergrößerte Darstellung gemäß Fig. 2d zur weiteren Erläuterung der bevorzugten Ausführung der Erfindung.

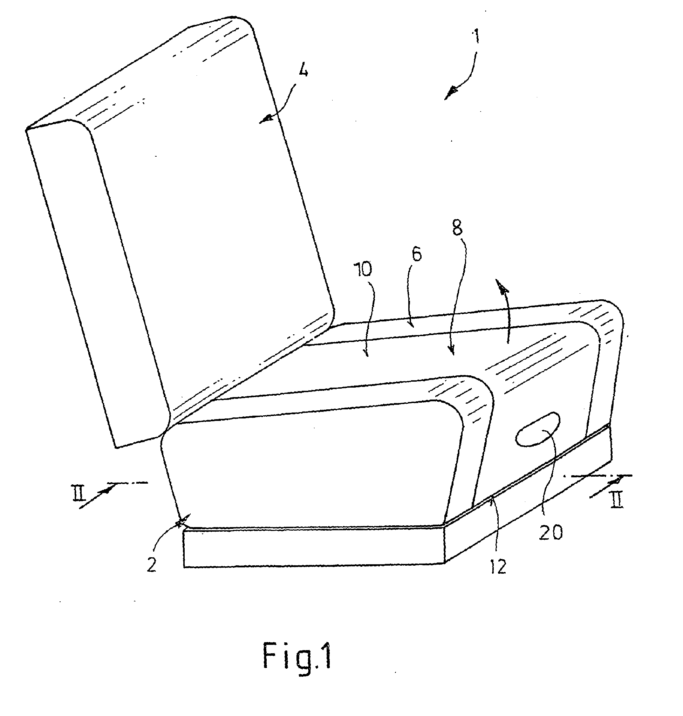

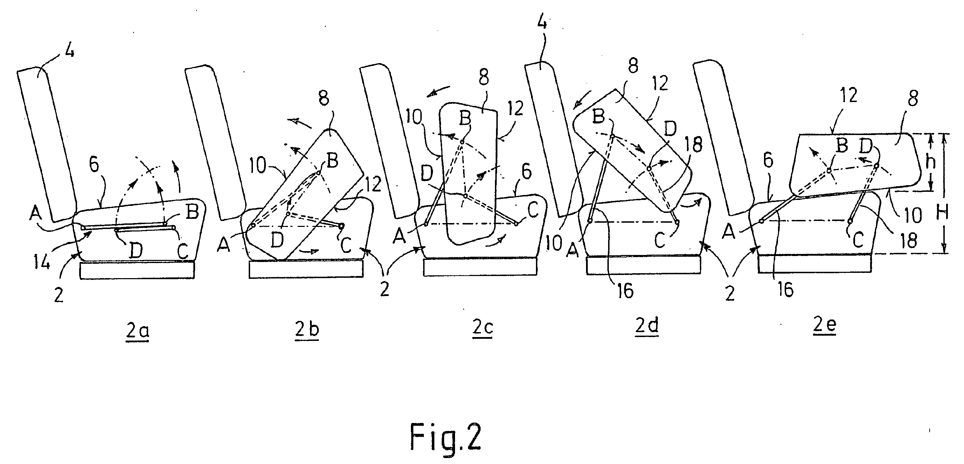

In Fig. 1 ist ein insbesondere zum Einbau in ein Kraftfahrzeug vorgesehener Sitz 1 veranschaulicht, der aus einem unteren Sitzpolsterteil 2 und einer Rückenlehne 4 besteht. Das Sitzpolsterteil 2 weist eine im Wesentlichen etwa horizontale oder leicht nach hinten in Richtung der Rückenlehne 4 geneigte Sitzfläche 6 auf. Ein Teilbereich des Sitzpolsterteils 2 ist als gesondertes Sitzsegment 8 ausgebildet. Im dargestellten Beispiel erstreckt sich das Sitzsegment 8 durchgehend vom hinteren, der Rückenlehne 4 benachbarten Randbereich bis zum gegenüberliegenden, vorderen Randereich des Sitzpolsterteils 2, so dass beidseitig neben dem Sitzsegment 8 jeweils insbesondere gleich breite Seitenrandbereiche des Sitzpolsterteils 2 verbleiben. Das Sitzsegment 8 weist eine Oberseite 10 und eine gegenüberliegende Unterseite 12 auf. Dabei ist das Sitzsegment 8 zwischen zwei Stellungen überführbar. In einer ersten Stellung gemäß Fig. 1 und 2a liegt es versenkt in dem Sitzpolsterteil 2 und bildet mit seiner Oberseite 10 einen Teil der Sitzfläche 6 des Sitzpolsterteils 2. In einer zweiten Stellung (Fig. 2e) ist das Sitzsegment 8 aus dem Sitzpolsterteil 2 heraus bewegt und gegenüber der Sitzfläche 6 erhöht angeordnet. Um das Sitzsegment 8 zwischen diesen Stellungen bewegen zu können, sind erfindungsgemäß Führungsmittel 14 derart vorgesehen, dass beim Überführen des Sitzsegmentes 8 zwischen seinen beiden Stellungen zusätzlich zu dem Höhenversatz jeweils eine zwangsläufige Wendebewegung um etwa 180° bewirkt wird, so dass das Sitzsegment 8 in der erhöhten zweiten Stellung gemäß Fig. 2e mit seiner dann etwa horizontal liegenden Unterseite 12 von dem Sitzpolsterteil 2 weg nach oben weist. Die Unterseite 12 des Sitzsegmentes 8 bildet bevorzugt eine tischartige Ablagefläche, kann aber auch als Armauflage (Armstütze) genutzt werden.

Darüber hinaus ist es zweckmäßig, wenn das Sitzsegment 8 auf seiner Unterseite 12 in der Zeichnung nicht erkennbare Halteaufnahmen, insbesondere Aufnahmevertiefungen, für Gegenstände, wie beispielsweise Getränkebehälter, Audio- und/oder Videogeräte und/oder Sonstiges aufweist.

Erfindungsgemäß ist das Sitzsegment 8 in seiner zweiten. Stellung mit der Unterseite 12 derart in einer ergonomischen Höhe h oberhalb der Sitzfläche 6 angeordnet, dass dies für den auf dem Nachbarsitz sitzenden Benutzer zur Armauflage und/oder zum Zugriff auf die Tischfläche bzw. die Halteaufnahmen komfortabel ist. Besonders vorteilhaft ist ein Höhenversatz h der Unterseite 12 gegenüber der Sitzfläche 6 von insbesondere etwa 20 cm. Folglich wir die Unterseite 12 zwischen den beiden Stellungen (Fig. 2a und 2e) insgesamt um eine Höhe H versetzt, die etwa dem Höhenversatz h zuzüglich der Dicke des Sitzsegmentes 8 entspricht.

Wie dargestellt können die Führungsmittel 14 mit Vorteil als Gelenkviereck-Getriebe mit zwei gleichartigen, beidseitig des Sitzsegmentes 8 parallel angeordneten Teilgetrieben ausgebildet sein.

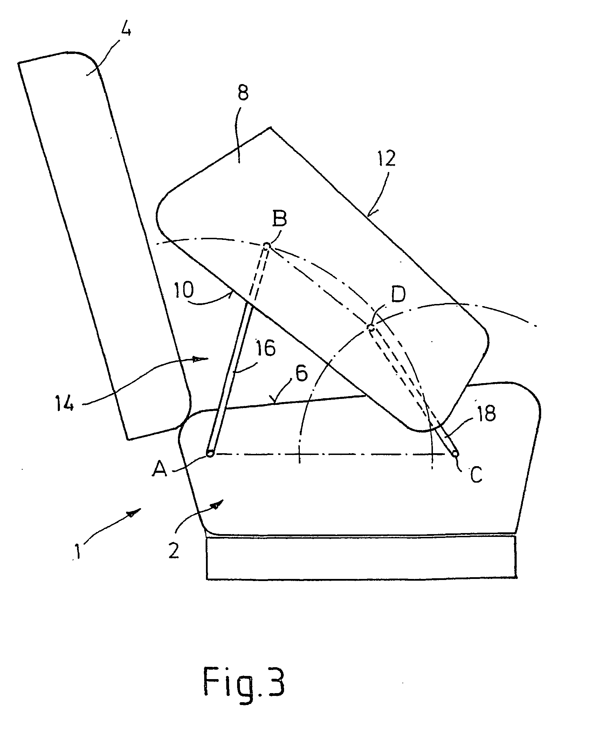

Wie sich aus Fig. 2 und 3 ergibt, weist jedes Teilgetriebe zwei Hebel 16, 18 auf, wobei jeder Hebel 16, 18 einseitig über ein Gelenk A bzw. C mit dem Sitzpolsterteil 2 bzw. einer tragenden Sitzstruktur und anderseitig über ein Gelenk B bzw. D mit dem Sitzsegment 8 schwenkbar verbunden ist. Diese vier Gelenke A, C, B, D definieren somit ein Gelenkviereck mit einer von dem Sitzpolsterteil 2 gebildeten Basis A-C, zwei von den Hebeln 16, 18 gebildeten Schwingen A-B und C-D sowie einer von dem Sitzsegment 8 gebildeten Koppel B-D. Dabei ist jedes Gelenkviereck A, C, B, D als im Wesentlichen durchschlagfähige Doppelinnenschwinge ausgebildet, wobei die Basis A-C die größte Viereckseite bildet, und die Summe aus größter und kleinster Viereckseite A-C plus B-D etwa gleich der Summe der beiden übrigen Viereckseiten A-B plus C-D ist. Zudem sind die Viereckseiten jedes Gelenkvierecks mit Vorteil derart ausgelegt, dass das Überführen des Sitzsegmentes 8 aus der ersten in die zweite Stellung durch eine - insbesondere im Bereich eines vorderen Griffelementes 20 (nur in Fig. 1 erkennbar) - im Wesentlichen bogenförmige, einem ergonomischen Aktionsradius eines menschlichen Arms entsprechende Bewegung erfolgt. Es kann von einem "intuitiven Bewegungsablauf" gesprochen werden. Dazu sind folgende Längenverhältnisse besonders vorteilhaft:
Basis A-C : Koppel B-D= etwa (1,8 bis 1,9) : 1, insbesondere 1,86 : 1, hintere Schwinge A-B : vordere Schwinge C-D= etwa (1,4 bis 1,5) : 1, insbesondere 1,42 : 1,
Basis A-C : hintere Schwinge A-B= etwa (1,1 bis 1,15) : 1, insbesondere 1,11 : 1, vordere Schwinge C-D : Koppel B-D= etwa (1,15 bis 1,2) : 1, insbesondere 1,18 : 1.

Das Sitzsegment 8 ist natürlich in beiden genannten Endstellungen seiner Überführbewegungen jeweils arretiert, und zwar in der ersten Stellung vorzugsweise durch bloße Auflage auf einer Sitzstruktur des Sitzpolsterteils 2. In der zweiten Stellung kann eine Arretierung durch gesonderte Mittel und/oder durch Selbsthemmung des Gelenk-Getriebes gewährleistet sein.

## Patentansprüche

1. Sitzanordnung, insbesondere für einen Fahrzeugsitz, mit einem unteren, eine im Wesentlichen etwa horizontale oder leicht geneigte Sitzfläche (6) aufweisenden Sitzpolsterteil (2) und einem Sitzsegment (8) mit einer Oberseite (10) und einer gegenüberliegenden Unterseite (12), wobei das Sitzsegment (8) über Führungsmittel (14) zwischen einer ersten Stellung, in der es in dem Sitzpolsterteil (2) versenkt mit der Oberseite (10) einen Teil der Sitzfläche (6) des Sitzpolsterteils (2) bildet, und einer zweiten Stellung, in der es aus der Sitzfläche (6) heraus gegenüber dem Sitzpolsterteil (2) erhöht angeordnet ist, bewegbar geführtist, **dadurch gekennzeichnet, dass** die Führungsmittel (14) derart ausgebildet sind, dass sie beim Überführen des Sitzsegmentes (8) zwischen seinen beiden Stellungen zusätzlich zu dem Höhenversatz jeweils eine zwangsläufige Wendebewegung um etwa 180° bewirken, so dass das Sitzsegment (8) in der erhöhten zweiten Stellung mit seiner Unterseite (12) von dem Sitzpolsterteil (2) weg nach oben weist.

2. Sitzanordnung nach Anspruch 1,
**dadurch gekennzeichnet, dass** das Sitzsegment (8) auf seiner Unterseite (12) eine tischartige Ablagefläche aufweist.

3. Sitzanordnung nach Anspruch 1 oder 2,
**dadurch gekennzeichnet, dass** das Sitzsegment (8) auf seiner Unterseite (12) Halteaufnahmen für Gegenstände, wie Getränkebehälter, Audio- und/oder Videogeräte und/oder Sonstiges, aufweist.

4. Sitzanordnung nach einem der Ansprüche 1 bis 3,
**dadurch gekennzeichnet,dass** das Sitzsegment (8) in der zweiten Stellung mit der Unterseite (12) derart in einer ergonomischen Höhe oberhalb der Sitzfläche (6) angeordnet ist, dass die Unterseite (12) auch zur Armauflage nutzbar ist.

5. Sitzanordnung nach einem der Ansprüche 1 bis 4,
**dadurch gekennzeichnet , dass** die Führungsmittel (14) als Gelenkviereck-Getriebe, insbesondere mit zwei gleichartigen, beidseitig des Sitzsegmentes (8) parallel angeordneten Teilgetrieben, ausgebildet sind.

6. Sitzanordnung nach Anspruch 5,
**dadurch gekennzeichnet, dass** das/jedes Teilgetriebe zwei Hebel (16, 18) aufweist, die einseitig über jeweils ein Gelenk (A, C) mit dem Sitzpolsterteil (2) und anderseitig über jeweils ein Gelenk (B, D) mit dem Sitzsegment (8) schwenkbar verbunden sind, wobei die Gelenke (A, C, B, D) ein Gelenkviereck mit einer von dem Sitzpolsterteil (2) gebildeten Basis (A-C), zwei von den Hebeln (16, 18) gebildeten Schwingen (A-B, C-D) und einer von dem Sitzsegment (8) gebildeten Koppel (B-D) definieren.

7. Sitzanordnung nach Anspruch 6,
**dadurch gekennzeichnet, dass** das/jedes Gelenkviereck (A, C, B, D) als im Wesentlichen durchschlagfähige Doppelinnenschwinge ausgebildet ist, wobei die Basis (A-C) die größte Viereckseite bildet und die Summe aus größter und kleinster Viereckseite (A-C plus B-D) etwa gleich der Summe der beiden übrigen Viereckseiten (A-B plus C-D) ist.

8. Sitzanordnung nach Anspruch 7,
**dadurch gekennzeichnet, dass** die Längenverhältnisse der Viereckseiten derart ausgelegt sind, dass das Überführen des Sitzsegmentes (8) aus der ersten in die zweite Stellung durch eine - insbesondere im Bereich eines Griffelementes (20) - im Wesentlichen bogenförmige, einem ergonomischen Aktionsradius eines menschlichen Arms entsprechende Bewegung erfolgt.

## Claims

1. Seat arrangement, in particular for a vehicle seat, having a lower seat cushion part (2), which has an essentially approximately horizontal or slightly inclined seat surface (6), and a seat segment (8) having an upper side (10) and an opposite lower side (12), the seat segment (8) being guided moveably via guide means (14) between a first position, in which it, recessed in the seat cushion part (2), uses the upper side (10) to form part of the seat surface (6) of the seat cushion part (2), and a second position, in which it is arranged raised out of the seat surface (6) relative to the seat cushion part (2), **characterized in that** the guide means (14) are designed in such a manner that, when the seat segment (8) is transferred between its two positions, they bring about, in addition to the offset in height, a respective inevitable turning movement through approximately 180°, so that, in the raised, second position, the seat segment (8) points with its lower side (12) upwards away from the seat cushion part (2).

2. Seat arrangement according to Claim 1, **characterized in that** the seat segment (8) has a table-like tray surface on its lower side (12).

3. Seat arrangement according to Claim 1 or 2, **characterized in that** the seat segment (8) has retaining holders for objects, such as drinks containers, audio and/or video equipment and/or other items, on its lower side (12).

4. Seat arrangement according to one of Claims 1 to 3, **characterized in that**, in the second position, the seat segment (8) is arranged with the lower side (12) at an ergonomic height above the seat surface (6) in such a manner that the lower side (16) can also be used for the arm rest.

5. Seat arrangement according to one of Claims 1 to 4, **characterized in that** the guide means (14) are designed as four-bar linkage mechanisms, in particular with two identical sub-mechanisms arranged parallel on both sides of the seat segment (8).

6. Seat arrangement according to Claim 5, **characterized in that** the/each sub-mechanism has two levers (16, 18) which are connected pivotably on one side to the seat cushion part (2) via a respective joint (A, C) and are connected pivotably on the other side to the .seat segment (8) via a respective joint (B, D), the joints (A, C, B, D) defining a four-bar linkage with a base (A-C) formed by the seat cushion part (2), two links (A-B, C-D) formed by the levers (16, 18) and a coupler (B-D) formed by the seat segment (8).

7. Seat arrangement according to Claim 6, **characterized in that** the/each four-bar linkage (A, C, B, D) is designed as a double inner link which can essentially be knocked through, the base (A-C) forming the largest linkage side and the sum of the largest and smallest linkage sides (A-C plus B-D) being approximately identical to the sum of the two remaining linkage sides (A-B plus C-D).

8. Seat arrangement according to Claim 7, **characterized in that** the length ratios of the linkage sides are configured in such a manner that the transfer of the seat segment (8) from the first position into the second position takes place by means of an - in particular in the region of a handle element (20) - essentially curved movement corresponding to an ergonomic radius of action of a person's arm.

## Revendications

1. Ensemble de siège, notamment pour un siège de véhicule, comprenant une partie de rembourrage de siège inférieure (2) présentant une surface de siège (6) essentiellement approximativement horizontale ou légèrement inclinée, et un segment de siège (8) avec un côté supérieur (10) et un côté inférieur opposé (12), le segment de siège (8) étant guidé de manière déplaçable par le biais de moyens de guidage (14) entre une première position dans laquelle il forme, renfoncé dans la partie de rembourrage de siège (2) avec le côté supérieur (10) une partie de la surface de siège (6) de la partie de rembourrage de siège (2), et une deuxième position dans laquelle il est disposé de manière rehaussée hors de la surface de siège (6) par rapport à la partie de rembourrage de siège (2), **caractérisé en ce que** les moyens de guidage (14) sont réalisés de telle sorte qu'ils causent, en plus du décalage en hauteur, à chaque fois un mouvement forcé de retournement d'environ 180° lors du transfert du segment de siège (8) entre ses deux positions, de sorte que le segment de siège (8), dans la deuxième position rehaussée, soit disposé avec son côté inférieur (12) vers le haut à l'écart de la partie de rembourrage de siège (2).

2. Ensemble de siège selon la revendication 1, **caractérisé en ce que** le segment de siège (8) présente sur son côté inférieur (12) une surface de rangement de type table.

3. Ensemble de siège selon la revendication 1 ou 2, **caractérisé en ce que** le segment de siège (8) présente, sur son côté inférieur (12), des logements de maintien pour des objets, tels que des récipients pour boissons, des appareils audio et/ou vidéo, et/ou autres.

4. Ensemble de siège selon l'une quelconque des revendications 1 à 3, **caractérisé en ce que** le segment de siège (8) est disposé dans la deuxième position avec le côté inférieur (12) à une hauteur ergonomique au-dessus de la surface du siège (6) de telle sorte que le côté inférieur (12) puisse être utilisé également comme accoudoir.

5. Ensemble de siège selon l'une quelconque des revendications 1 à 4, **caractérisé en ce que** les moyens de guidage (14) sont réalisés sous forme de mécanisme à quadrilatère, notamment avec deux mécanismes partiels de même type, disposés parallèlement des deux côtés du segment de siège (8).

6. Ensemble de siège selon la revendication 5, **caractérisé en ce que** le ou chaque mécanisme partiel présente deux leviers (16, 18) qui sont connectés à pivotement d'un côté par le biais d'une articulation respective (A, C) à la partie de rembourrage du siège (2) et de l'autre côté par le biais d'une articulation respective (B, D), au segment de siège (8), les articulations (A, C, B, D) définissant un quadrilatère avec une base (A-C) formée par la partie de rembourrage de siège (2), deux ailes (A-B, C-D) formées par les leviers (16, 18) et une bielle (B-D) formée par le segment de siège (8).

7. Ensemble de siège selon la revendication 6, **caractérisé en ce que** le ou chaque quadrilatère (A, C, B, D) est réalisé essentiellement en tant que double aile interne capable d'être rabattue, la base (A-C) formant le plus grand côté du quadrilatère et la somme du plus grand et du plus petit côté du quadrilatère (A-C plus B-D) étant approximativement égale à la somme des deux autres côtés restants du quadrilatère (A-B plus C-D).

8. Ensemble de siège selon la revendication 7,
**caractérisé en ce que** les rapports de longueur des côtés du quadrilatère sont conçus de telle sorte que le passage du segment de siège (8) de la première dans la deuxième position s'effectue par un déplacement essentiellement en forme d'arc, correspondant à un rayon d'action ergonomique d'un bras humain - notamment dans la région d'un élément de préhension (20).
